# EUROPÄISCHE PATENTSCHRIFT

(11) **EP 1 850 463 B1**
(45) Veröffentlichungstag und Bekanntmachung des Hinweises auf die Patenterteilung: **26.09.2018**
(21) Anmeldenummer: 07106098.2
(22) Anmeldetag: 13.04.2007
(51) Int. Cl.: H02K 15/00

(54) **Verfahren und Vorrichtung zur Herstellung von Schweißverbindungen an Leitern einer elektrischen Maschine**
Method and device for manufacturing welded connections on the conductors of an electric machine
Procédé et dispositif destinés à la fabrication de liaisons soudées sur des conducteurs d'une machine électrique

(30) Priorität: 26.04.2006 DE 102006019311
(43) Veröffentlichungstag der Anmeldung: 31.10.2007
(73) Patentinhaber: SEG Automotive Germany GmbH, 70499 Stuttgart (DE)
(72) Erfinder: Meyer, Reinhard, 74321 Bietigheim-Bissingen (DE)
(74) Vertreter: Steinbauer, Florian

(56) Entgegenhaltungen:
- EP-A- 1 077 103
- EP-A- 1 187 299
- EP-A- 1 376 816
- JP-A- 2004 254 368
- US-A1- 2003 024 101
- US-A1- 2003 159 270

## Beschreibung

### Stand der Technik

Die Erfindung geht aus von einem Verfahren und einer Vorrichtung zur Herstellung von Schweißverbindungen an Leitern einer elektrischen Maschine, insbesondere eines Drehstromgenerators für Kraftfahrzeuge, nach der Gattung der unabhängigen Ansprüche. Ein derartiges Verfahren und eine zugehörige Vorrichtung sind beispielsweise aus der DE 40 31 276 A1 bekannt, wobei der Stator der Maschine eine Wicklung aus einzelnen Wicklungsstäben aufweist, die haarnadelförmig vorgebogen und mit einem Spreizschritt von einer Polteilung in die Blechpaketnuten des Stators eingesteckt sind. Die freien Enden der Wicklungsstäbe sind auf der anderen Seite des Blechpaketes gegeneinander verschränkt und paarweise miteinander verschweißt. Hierbei besteht die Forderung, dass in einem kompakt ausgeführten Wickelkopf die Verbindungsstellen sehr dicht beieinander liegen sollen, was bei herkömmlichen Schweißverbindungen Schwierigkeiten bereitet.

Aus der EP 1 187 299 A2 ist eine Möglichkeit zum Verbinden von solchen Leitern bzw. deren Enden bekannt, bei der ein Paar solcher Leiterenden zwischen zwei Haltemitteln gehalten und mittels kontaktloser Wärmequelle erwärmt und damit verschmolzen werden. Als kontaktlose Wärmequelle bzw. als kontaktloses Verbindungsverfahren kommt dabei beispielsweise Lichtbogenschweißen in Betracht.
Aus US 2003/0024101 A1 und US 2003/0024101 A1 sind Möglichkeiten zum Verbinden solcher Leiterenden bekannt, bei dem eine innere und eine äußere Gemeinschaftselektrode verwendet werden, zwischen denen mehrere Paare solcher Leiterenden gehalten werden. Mittels Lichtbogenschweißen werden diese Paare dann nacheinander verschmolzen.

### Offenbarung der Erfindung

Das erfindungsgemäße Verfahren gemäß Anspruch 1 und die beanspruchte Vorrichtung mit einer elektrischen Maschine gemäß Anspruch 7 bieten gegenüber dem Stand der Technik die Möglichkeit, mit verhältnismäßig geringem fertigungstechnischen und konstruktiven Aufwand die notwendigen Schweißverbindungen schnell und präzise auf engem Raum herzustellen, wobei die Verbindungsstellen bei einem Stator mit 2n Leitern pro Nut in n konzentrischen Reihen angeordnet sind. Durch die Kontaktierung der Enden der zu verbindenden Leitersegmente einerseits mittels mehreren diskreten, radial ausgerichteten Elektroden und andererseits wenigstens einer zur Maschinenachse koaxialen, ringförmigen Gemeinschaftselektrode wird der Zugang zu den einzelnen Verbindungsstellen deutlich vereinfacht und gleichzeitig die erforderliche Präzision der Schweißverbindungen sichergestellt, insbesondere wenn die diskrete, radial ausgerichtete Elektrode jeweils nur ein einzelnes Paar der zu verschweißenden Leitersegmente kontaktiert. In diesem Fall sind der Schweißstrom und der Anpressdruck auf die Schweißstelle exakt definiert und sie können durch geeignete Messinstrumente in einfacher Weise überwacht werden.

Erfindungsgemäß werden mehrere der diskreten, radial ausgerichteten Elektroden am Statorumfang angeordnet, beispielsweise vier um jeweils 90° versetzt.
Eine Rationalisierung und Beschleunigung des Schweißvorganges kann dadurch erreicht werden, dass die diskrete, radial ausgerichtete Elektrode in einem Schweißvorgang mehrere nebeneinander liegende Leitersegmente kontaktiert, wobei die Gegenelektrode in Form der ringförmigen Gemeinschaftselektrode ohnehin an einer Mehrzahl oder an der Gesamtzahl der zu verschweißenden Paare der Leitersegmente gleichzeitig anliegt. Zumindest im Fall der Kontaktierung von zwei nebeneinander liegenden Leiterpaaren durch die diskrete Elektrode kann noch eine gleichmäßige Verteilung des Schweißstromes und des Anpressdruckes erreicht werden.

Eine besonders vorteilhafte Ausgestaltung des erfindungsgemäßen Verfahrens und der zugehörigen Vorrichtung besteht darin, dass zum Verschweißen der Enden von vier, jeweils paarweise zu verbindenden Leitersegmenten einerseits zwei diskrete, am Umfang des Stators innen und außen radial fluchtend an den Leiterenden angreifende Elektroden verwendet werden, welche mit einer mittig zwischen den Leiterenden und den diskreten Elektroden verlaufenden, ring- oder ringsegmentförmigen Gemeinschaftselektrode zusammenwirken. Diese Anordnung erlaubt bei minimiertem Platzbedarf zwischen den Enden der paarweise zu verbindenden Leitersegmente eine sichere und gleichzeitige Kontaktierung von zwei Schweißstellen an zwei Leiterpaaren, wobei ohne Gegendruck durch die Gemeinschaftselektrode von den diskreten Elektroden beim Schweißvorgang die erforderliche radial gerichtete Anpresskraft auf die zu verbindenden Leiterenden des Stators und auf die Gemeinschaftselektrode ausgeübt wird. Die Verbindungsstellen einer Steckwicklung mit vier Leitern je Nut sind hierbei in gut zugänglicher Weise in zwei konzentrischen Reihen im Wickelkopf des Stators angeordnet.

In gebräuchlichen Anordnungen von Steckwicklungen für Generatoren von Kraftfahrzeugen liegen die Schweißverbindungen von haarnadelförmig vorgebogenen Leitersegmenten einseitig im Wickelkopf, vorzugsweise auf der Antriebsseite der Maschine. Bei Verwendung von Einzelstäben für die Leitersegmente können in gleicher Weise jedoch auch Schweißverbindungen in beiden Wickelköpfen auf beiden Stirnseiten des Stators hergestellt werden.

Neben der erfindungsgemäßen Verbesserung des Schweißverfahrens ergeben sich auch bei der vorgeschlagenen Schweißvorrichtung mit einer elektrischen Maschine deutliche Vorteile gegenüber dem Stand der Technik, insbesondere hinsichtlich der Zugänglichkeit der Schweißstellen und des konstruktiven Aufwandes für die Schweißelektroden. Dies wird erreicht durch die Verwendung einerseits einer diskreten, radial ausgerichteten Elektrode zur Kontaktierung wenigstens eines Leiterendes eines Paares der zu verbindenden Leitersegmente sowie andererseits durch eine ringförmige Gemeinschaftselektrode als Gegenelektrode zur gleichzeitigen Kontaktierung einer Mehrzahl von Leiterenden. Die erzielbaren Vorteile treten insbesondere dann in Erscheinung, wenn zur jeweils paarweisen Verbindung der Leitersegmente zwei diskrete Elektroden radial gegenüberliegen beidseitig der Gemeinschaftselektrode und der zu verbindenden Leiter angeordnet sind, da bei dieser Anordnung von der ringförmigen Gemeinschaftselektrode kein Druck und keine Gegenkraft auf die Schweißstelle ausgeübt werden muss, was deren Gestaltung und Anordnung erheblich vereinfacht. Sollen die zu verbindenden Enden der Leitersegmente beim Schweißvorgang radial übereinander positioniert und gehalten werden, so kann dies in besonders einfacher Weise ohne zusätzliche Positionierungshilfen durch eine konturierte Oberfläche zumindest der diskreten Elektroden erreicht werden. Zusätzlich kann auch die Gemeinschaftselektrode noch eine entsprechend konturierte Oberfläche aufweisen. Die Oberfläche der diskreten Elektroden ist jedoch leichter formbar und bearbeitbar und kann mit geringem Aufwand der Querschnittsform der Leitersegmente angepasst werden.

### Kurze Beschreibung der Zeichnungen

Ausführungsbeispiele der Erfindung sind in den Zeichnungen dargestellt und in der nachfolgenden Beschreibung näher erläutert. Es zeigen
- Figur 1: einen Längsschnitt durch eine elektrische Maschine,
- Figur 2: eine perspektivische Ansicht eines Stators mit einer Steckwicklung mit für den Schweißvorgang vorgeformten Enden der Leitersegmente,
- Figur 3: einen Teilschnitt durch das Blechpaket des Stators mit radial verlaufenden Nuten mit jeweils vier übereinander angeordneten Leitersegmenten,
- Figur 4: eine schematische Darstellung der erfindungsgemäßen Schweißvorrichtung mit zwei diskreten, radial ausgerichteten Elektroden und einer ringförmigen Gemeinschaftselektrode und
- Figur 5: eine Darstellung der geschränkten und gekröpften, aus den Nuten herausragende Enden miteinander zu verschweißende Leitersegmente.

### Ausführungsformen der Erfindung

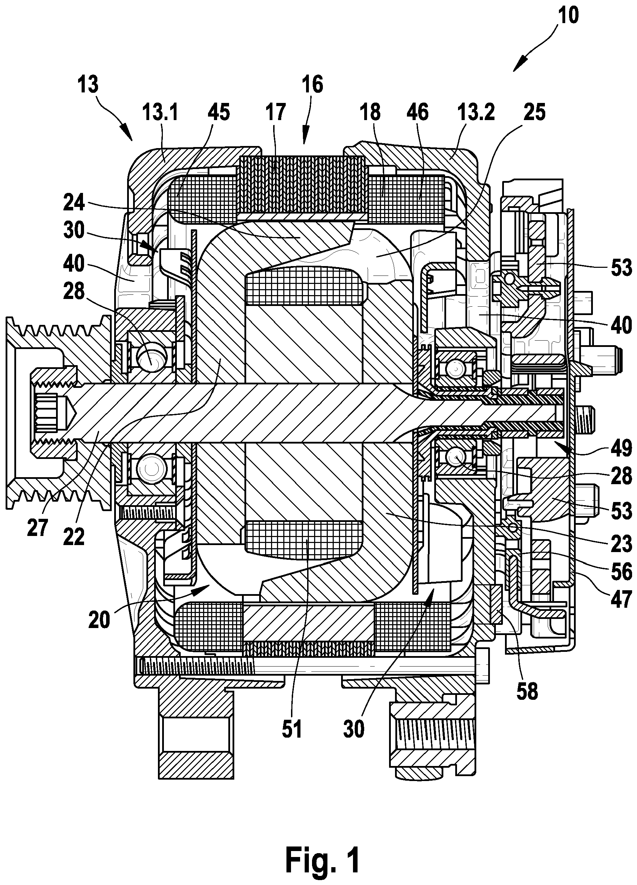

In Figur 1 ist ein Querschnitt durch eine elektrische Maschine 10, hier in der Ausführung als Drehstromgenerator für Kraftfahrzeuge, dargestellt. Diese elektrische Maschine 10 weist unter anderem ein zweiteiliges Gehäuse 13 auf, dass aus einem ersten Lagerschild 13.1 und einem zweiten Lagerschild 13.2 besteht. Das Lagerschild 13.1 und das Lagerschild 13.2 nehmen in sich einen Stator 16 auf, mit einem kreisringförmigen Blechpaket 17, in dessen radial ausgerichtete, nach innen offene und sich axial erstreckende Nuten eine Ständerwicklung 18 eingelegt ist. Der ringförmige Stator 16 umgibt mit seiner radial nach innen gerichteten, genuteten Oberfläche einen Rotor 20, der als Klauenpolläufer ausgebildet ist. Der Rotor 20 besteht unter anderem aus zwei Klauenpolplatinen 22 und 23, an deren Außenumfang sich jeweils in axialer Richtung erstreckende Klauenpolfinger 24 und 25 angeordnet sind. Beide Klauenpolplatinen 22 und 23 sind im Rotor 20 derart angeordnet, dass ihre sich in axialer Richtung erstreckenden Klauenpolfinger 24, 25 am Umfang des Rotors 20 einander abwechseln. Es ergeben sich dadurch magnetisch erforderliche Klauenpolzwischenräume zwischen den gegensinnig magnetisierten Klauenpolfingern 24 und 25. Der Rotor 20 ist mittels einer Welle 27 und je einem auf je einer Rotorseite befindlichen Wälzlager 28 in den jeweiligen Lagerschilden 13.1 beziehungsweise 13.2 drehbar gelagert.

Der Rotor 20 weist zwei axiale Stirnflächen auf, an denen jeweils ein Lüfter 30 befestigt ist. Diese Lüfter 30 bestehen im Wesentlichen aus einem plattenförmigen beziehungsweise scheibenförmigen Abschnitt, von dem Lüfterschaufeln in bekannter Weise ausgehen. Diese Lüfter 30 dienen dazu, über Öffnungen 40 in den Lagerschilden 13.1 und 13.2 einen Luftaustausch zwischen der Außenseite und dem Innenraum der elektrischen Maschine 10 zu ermöglichen. Dazu sind die Öffnungen 40 an den axialen Enden der Lagerschilde 13.1 und 13.2 vorgesehen, über die mittels der Lüfter 30 Kühlluft in den Innenraum der elektrischen Maschine 10 eingesaugt wird. Diese Kühlluft wird durch die Rotation der Lüfter 30 radial nach außen beschleunigt, so dass sie durch die kühlluftdurchlässigen Wickelköpfe 45 auf der Antriebsseite und 46 auf der Elektronikseite hindurchtreten kann. Durch diesen Effekt werden die Wickelköpfe gekühlt. Die Kühlluft nimmt nach dem Hindurchtreten durch die Wickelköpfe, beziehungsweise nach dem Umströmen dieser Wickelköpfe einen Weg radial nach außen durch in Figur 1 nicht dargestellte Öffnungen.

In Figur 1 auf der rechten Seite befindet sich eine Schutzkappe 47, die verschiedene Bauteile vor Umgebungseinflüssen schützt. So deckt diese Schutzkappe 47 beispielsweise eine Schleifringbaugruppe 49 ab, die eine Erregerwicklung 51 mit Erregerstrom versorgt. Um diese Schleifringbaugruppe 49 herum ist ein Kühlkörper 53 angeordnet, der hier als Pluskühlkörper wirkt. Als so genannter Minuskühlkörper wirkt das Lagerschild 13.2. Zwischen dem Lagerschild 13.2 und dem Kühlkörper 53 ist eine Anschlussplatte 56 angeordnet, welche im Lagerschild 13.2 befestigte Minusdioden 58 und in dieser Darstellung nicht gezeigte Plusdioden im Kühlkörper 53 in Form einer Brückenschaltung miteinander verbindet.

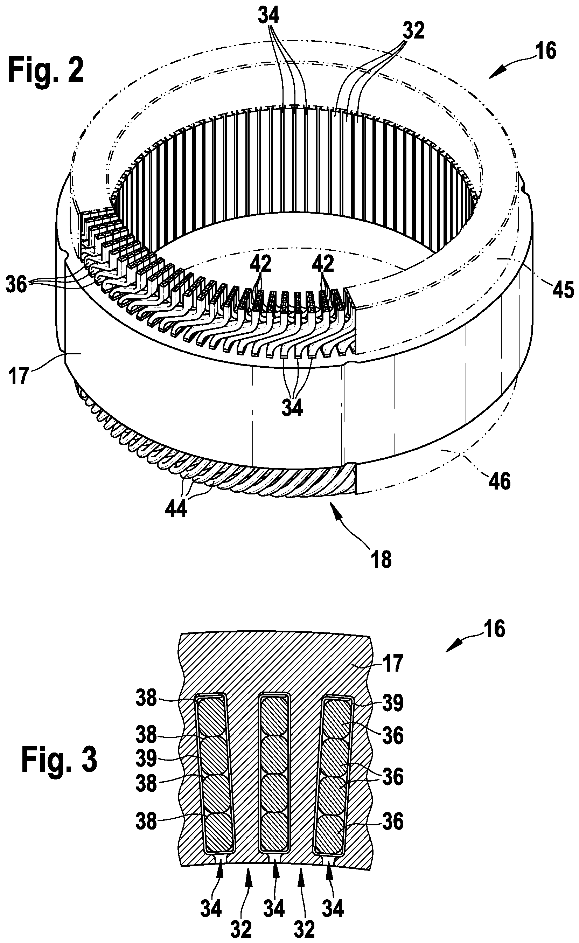

Figur 2 zeigt eine perspektivische, schematisierte Darstellung des Stator 16, an dessen innerer Oberfläche Pole 32 und Nuten 34 erkennbar sind. Hierbei enthalten die Nuten 34, wie dies aus Figur 3 deutlicher ersichtlich ist, jeweils vier Leitersegmente 36, welche einerseits an ihrer Oberfläche durch eine Lackisolation 38 und andererseits gemeinsam durch Isolationseinlagen 39 gegen das Blechpaket 17 des Stators 16 isoliert sind. Die Leitersegmente 36 sind in bekannter Weise an der Unterseite des Stators 16 haarnadelförmig umgebogen und um jeweils eine Polteilung geschränkt. Ihre gleich langen, freien Enden 42 ragen oben, ebenfalls um eine Polteilung geschränkt, aus den Nuten 34 heraus und sind in vier konzentrischen Reihen angeordnet. Hierbei liegen die freien Enden 42 im antriebsseitigen Wickelkopf 45, die haarnadelförmigen Umlenkungen 44 im Wickelkopf 46, welcher nach dem Zusammenbau der Maschine 10 zur Dioden- und Verschaltungsseite ausgerichtet ist. Diese Anordnung hat den Vorteil, dass im antriebsseitigen Wickelkopf mehr Raum für die Schweißverbindungen zur Verfügung steht.

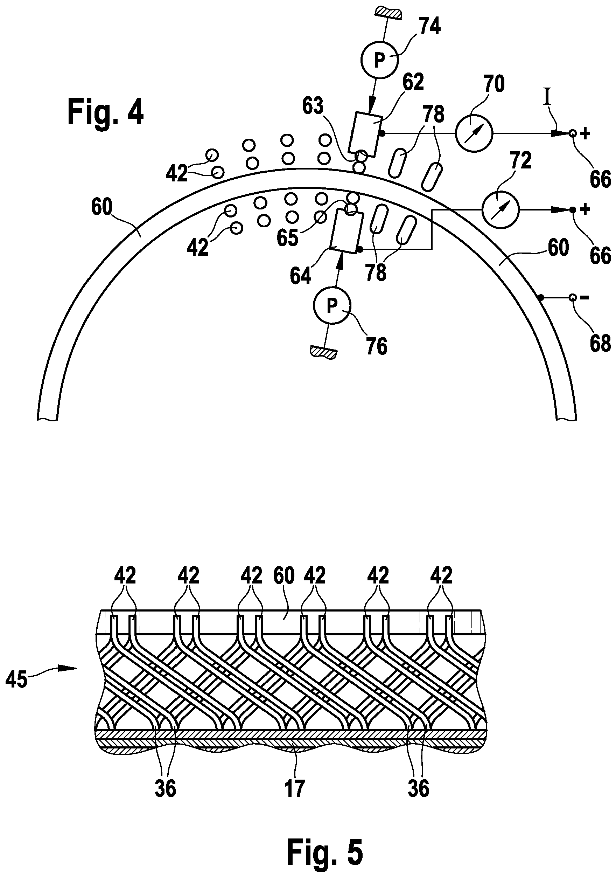

Figur 4 zeigt eine schematische Darstellung der erfindungsgemäßen Schweißvorrichtung mit einer ringförmigen Gemeinschaftselektrode 60, welche mittig zwischen den Paaren der zu verschweißenden Enden 42 der Leitersegmente 36 angeordnet ist. Diese Ausführungsform entspricht der Anordnung in Figur 2 mit jeweils vier radial fluchtenden freien Enden 42, wobei jeweils zwei der Enden 42 in zwei konzentrischen, zu verschweißenden Reihen angeordnet sind. Als Gegenelektroden zu der Gemeinschaftselektrode 60 sind zwei diskrete, radial ausgerichtete Elektroden 62 und 64 vorgesehen, welche mit dem Pluspol 66 der Schweißvorrichtung verbunden sind, während die Gemeinschaftselektrode 60 an den Minuspol 68 der Schweißstromquelle angeschlossen ist. Der Schweißstrom I für jede einzelne Schweißverbindung wird durch geeignete Messeinrichtungen 70, 72 überwacht. Außerdem wird der Anpressdruck P der diskreten Elektroden 62 und 64 durch Druckmesseinrichtungen 74 und 76 kontrolliert. Die fertigen Schweißverbindungen von jeweils zwei Enden 42 der Leitersegmente 36 bilden ovale Schweißkuppen 78, welche gleichmäßig geformt und beabstandet sind. Bei Bedarf können diese Schweißkuppen 78 nachträglich isoliert werden, beispielsweise durch Isolierlack, da die Lackisolationen 38 an den Enden 42 der Leitersegmente 36 in bekannter Weise vor dem Schweißvorgang entfernt wurden oder beim Schweißvorgang verdampft sind.

Eine Verbesserung der Positionierung und Arretierung der Leitersegmente 36 erreicht man durch konturierte Stirnflächen 63, 65 der diskreten Elektroden 62 und 64, wobei die Konturen an der Stirnfläche der Elektroden 62 und 64 vorzugsweise dem Querschnitt der Enden 42 der Leitersegmente 36 angepasst sind. Diese Positionierung und Arretierung der Enden 42 kann durch zusätzliche Konturen an der Oberfläche der Gemeinschaftselektrode 60 noch verbessert werden, welche in Figur 4 nicht dargestellt sind. Sowohl die Gemeinschaftselektrode 60 wie auch die diskreten Elektroden 62 und 64 bestehen üblicherweise aus Wolfram oder Wolframlegierungen. Konturen an den Stirnflächen der diskreten Elektroden 62 und 64 sind dabei einfacher herstellbar und nacharbeitbar als Konturen an der Oberfläche der Gemeinschaftselektrode 60, sodass hierauf aus Kostengründen verzichtet werden kann.

Figur 5 zeigt die Form der Leitersegmente 36 im antriebsseitigen Wickelkopf 45 mit ebenfalls vier Leitersegmenten 36 je Nut 34, wobei die Leitersegmente 36 in den Nuten 34 jedoch abweichend von den Anordnungen in Figur 2 und Figur 3 jeweils paarweise nebeneinander und übereinander angeordnet sind. So ragen jeweils zwei Leitersegmente 36 mit zwei freien Enden 42 parallel zueinander aus jeder Nut 34 heraus, welche dann jeweils um eine Polteilung gekröpft und paarweise an ihren freien Enden 42 durch eine Widerstandsschweißung verbunden werden. Von der Schweißvorrichtung ist in dieser Darstellung nur die Gemeinschaftselektrode 60 gezeichnet. Die erforderliche diskrete Gegenelektrode, welche die Enden 42 der Leitersegmente 36 an die Gemeinschaftselektrode 60 einzeln oder paarweise andrückt und bestromt, ist in dieser Darstellung nicht gezeigt.

In einem Beispiel, welches nicht zur Erfindung gehört, können anstelle einer in sich geschlossenen, ringförmigen Elektrode 60 auch eine oder mehrere ringsegmentförmige Elektroden mittig zwischen die diskreten Elektroden 62 und 64 eingebracht und entsprechend dem Fortgang des Schweißvorgangs verschoben werden. Eine derartige segmentförmige Elektrode ist preiswerter herstellbar als eine Ringelektrode. Gegebenenfalls können auch mehrere Ringsegmente hintereinander gereiht werden zu einem geschlossenen Ring.

Bei einem Schweißvorgang, bei dem nur zwei Enden 42 zu verschweißen sind, kann bei einer Anordnung gemäß Figur 4 eine der beiden diskreten Elektroden 62 oder 64 entfallen, vorzugsweise die innere Elektrode 64, wobei der Anpressdruck durch die Einzelelektrode 62 dann von der Gemeinschaftselektrode 60 aufgefangen werden muss. Weiterhin ist es möglich, anstelle der Verschweißung jeweils eines Einzelpaares der freien Enden 42 der Leitersegmente 36 gleichzeitig beispielsweise zwei Paare der freien Enden durch eine diskrete Elektrode 62 oder 64 zu verschweißen, wobei auf eine gleichmäßige Kontaktierung mit im Wesentlichen gleichem Schweißstrom und gleichem Anpressdruck geachtet werden muss. Die Gemeinschaftselektrode 60 wird dabei in gleicher Weise zwischen die konzentrisch angeordneten Reihen von Leiterenden eingeschoben oder an deren Innenumfang angelegt. In diesem Fall kann jedoch nicht die vorteilhafte Messung des Schweißstromes I, der Anpresskraft P auf die Schweißstelle sowie die Schweißzeit für jede einzelne Verbindungsstelle überwacht werden, eine einwandfreie Schweißverbindung muss hier durch eine exakte Positionierung der Elektroden und der Leiterenden 42 sichergestellt werden.

## Patentansprüche

1. Verfahren zur Herstellung von Schweißverbindungen (78) an Leitern einer elektrischen Maschine (10), welche einen Stator (16) mit einer Steckwicklung (18) aufweist, deren Leitersegmente (36) zumindest in einem Wickelkopf (45,46) auf einer Stirnseite des Blechpaketes (17) zu einer Wellenwicklung oder Schleifenwicklung verschaltet werden, indem aus den Nuten (34) des Stators (16) herausragende, in konzentrischen Reihen angeordnete Enden (42) der Leitersegmente (36) durch Schweißen paarweise verbunden werden, **dadurch gekennzeichnet, dass** die Enden (42) der Leitersegmente (36) durch Widerstandsschweißen paarweise verbunden werden, wobei die Enden (42) der zu verbindenden Leitersegmente (36) einerseits durch mehrere diskrete, radial ausgerichtete und am Statorumfang angeordnete Elektroden (62, 64) und andererseits durch eine zur Maschinenachse koaxiale, ringförmige Gemeinschaftselektrode (60), oder eine Gemeinschaftselektrode bestehend aus mehreren hintereinander gereihten Ringsegmenten, die einen geschlossenen Ring bilden, verschweißt werden.

2. Verfahren nach Anspruch 1, **dadurch gekennzeichnet, dass** die Enden (42) von vier, jeweils paarweise zu verbindenden Leitersegmenten (36) einerseits durch wenigstens zwei diskrete, innen und außen radial fluchtend an den Leiterenden angreifende Elektroden (62,64) und andererseits durch wenigstens eine mittig zwischen den Leiterenden (42) und den diskreten Elektroden (62,64) verlaufende, ring- oder ringsegmentförmige Gemeinschaftselektrode (60) kontaktierbar sind.

3. Verfahren nach Anspruch 1 oder 2, **dadurch gekennzeichnet, dass** von der oder den diskreten Elektroden (62,64) beim Schweißvorgang eine radial gerichtete Anpresskraft (P) auf die zu verbindenden Leiterenden (42) des Stators (16) und auf die Gemeinschaftselektrode (60) ausgeübt wird.

4. Verfahren nach einem der vorhergehenden Ansprüche, **dadurch gekennzeichnet, dass** die Schweißverbindungen (78) einseitig in dem Wickelkopf (45) auf der Antriebsseite der Maschine (10) hergestellt werden.

5. Verfahren nach einem der vorhergehenden Ansprüche, **dadurch gekennzeichnet, dass** die Größe des Schweißstromes (I) und/oder der Anpresskraft (P) beim Schweißen für jede einzelne Schweißverbindung (78) durch eine Kontrolleinrichtung (70,72,74,76) überwacht wird.

6. Verfahren nach einem der vorhergehenden Ansprüche, **dadurch gekennzeichnet, dass** die Schweißverbindungen (78) einer Steckwicklung (18) mit vier übereinander liegenden Leitersegmenten (36) je Nut (34) in zwei konzentrischen Reihen im Wickelkopf (45) des Stators hergestellt werden.

7. Vorrichtung zur Herstellung von Schweißverbindungen (78) an Leitern einer elektrischen Maschine (10) mit einer elektrischen Maschine (10), welche einen Stator (16) mit einer Steckwicklung (18) aufweist, deren Leitersegmente (36) zumindest in einem Wickelkopf (45, 46) auf einer Stirnseite des Blechpaketes (17) zu einer Wellenwicklung oder Schleifenwicklung verschaltet werden, indem aus den Nuten (34) des Stators (16) herausragende, in konzentrischen Reihen angeordnete Enden (42) der Leitersegmente durch Schweißen paarweise verbunden werden, **dadurch gekennzeichnet, dass** die Enden (42) der Leitersegmente durch Widerstandsschweißen paarweise verbunden werden, wobei die Schweißvorrichtung mehrere diskrete, radial ausgerichtete und am Statorumfang angeordnete Elektroden (62,64) zur Kontaktierung der Enden (42) mehrerer Paare der zu verbindenden Leitersegmente (36) sowie eine ringförmige Gemeinschaftselektrode (60), oder eine Gemeinschaftselektrode bestehend aus mehreren hintereinander gereihten Ringsegmenten, die einen geschlossenen Ring bilden, zur Kontaktierung einer Mehrzahl von Leiterenden (42) aufweist.

8. Vorrichtung mit einer elektrischen Maschine (10) nach Anspruch 7, **dadurch gekennzeichnet, dass** zur jeweils paarweisen Verbindung von vier übereinander liegenden Leitersegmenten (36) zwei diskrete Elektroden (62,64) radial gegenüberliegend beidseitig der Gemeinschaftselektrode (60) und der zu verbindenden Leiterpaare angeordnet sind.

9. Vorrichtung mit einer elektrischen Maschine (10) nach Anspruch 7 oder 8, **dadurch gekennzeichnet, dass** die zu verbindenden Enden (42) der Leitersegmente (36) durch die Elektroden (60, 62, 64) der Schweißvorrichtung radial übereinander gehalten sind.

10. Vorrichtung mit einer elektrischen Maschine (10) nach einem der Ansprüche 7 bis 9, **dadurch gekennzeichnet, dass** die zu verbindenden Enden (42) der Leitersegmente (36) durch konturierte Stirnflächen (63, 65) der diskreten Elektroden (62,64) und/oder der Gemeinschaftselektrode (60) beim Schweißvorgang positionierbar sind.

## Claims

1. A method for producing welded joints (78) on conductors of an electrical machine (10), which has a stator (16) with a plug-in winding (18), whose conductor segments (36) are connected to form a wave winding or loop winding, at least in a winding head (45,46) on a front side of the laminated core (17), by connecting ends (42) of the conductor segments (36) projecting in concentric rows from the grooves (34) of the stator (16) by welding in pairs, **characterised in that** the ends (42) of the conductor segments (36) are connected in pairs by resistance welding, wherein the ends (42) of the conductor segments to be connected (36) are welded on the one hand by a plurality of discrete electrodes (62, 64), which are radially oriented and arranged on the periphery of the stator, and on the other hand by an annular common electrode (60) which is coaxial to the machine axis, or by a common electrode consisting of several ring segments, successively lined up and forming a closed ring.

2. The method according to Claim 1, **characterised in that** the ends (42) of four conductor segments (36) to be connected in pairs, can be contacted on the one hand, by at least two discrete electrodes (62, 64) engaging at inner side and at the outer side in a radially aligned manner at the conductor ends and, on the other hand, by at least a ring-shaped or ring-segment-shaped common electrode (60) arranged centrally between the conductor ends (42) and the discrete electrodes (62, 64).

3. The method according to claim 1 or 2, **characterised in that** a radially directed contact force (P) is exerted on the conductor ends (42), to be connected, of the stator (16) and on the common electrode (60), which force is generated by the discrete electrode(s) (62,64) during the welding process.

4. The method according to one of the preceding claims, **characterised in that** the welded connections (78) are provided on one side in the winding head (45) on the drive side of the machine (10).

5. The method according to any of the preceding claims, **characterised in that** the size of the welding current (I) and/or the contact pressure (P) are monitored by a control device (70,72,74,76) during welding for each individual welded joint (78).

6. The method according to any of the preceding claims, **characterised in in that** the welded connections (78) of a plug-in winding (18) are provided in two concentric rows in the winding head (45) of the stator, with four superimposed conductor segments (36) per groove (34).

7. method device for producing welded joints (78) on conductors of an electrical machine (10) with an electrical machine (10), which has a stator (16) with a plug-in winding (18), whose conductor segments (36) are connected to form a wave winding or loop winding, at least in a winding head (45,46) on a front side of the laminated core (17), by connecting ends (42) of the conductor segments (36) projecting in concentric rows from the grooves (34) of the stator (16) by welding in pairs, **characterised in that** the ends (42) of the conductor segments (36) are connected in pairs by resistance welding, wherein the welding device comprises a plurality of discrete, radially oriented electrodes (62, 64) arranged at the circumference of the stator for contacting the ends (42) of a plurality of pairs of conductor segments (36) to be connected, and an annular common electrode (60) or a common electrode consisting of a plurality of ring segments arranged in series forming a closed ring for contacting a plurality of conductor ends (42).

8. The device with an electrical machine (10) according to claim 7, **characterised in that** two discrete electrodes (62, 64) are arranged radially opposite each other on both sides of the common electrode (60) and the pairs of conductors to be connected, for the pairwise connection of four superimposed conductor segments (36).

9. The device with an electrical machine (10) according to claim 7, **characterised in that** the ends (42) of the conductor segments (36) to be connected are held radially one above the other by the electrodes (60, 62, 64) of the welding device.

10. The device with an electrical machine (10) according to one of claims 7 to 9, **characterised in that** the ends (42) of the conductor segments (36) to be connected can be positioned by contoured end faces (63, 65) of the discrete electrodes (62, 64) and/or the common electrode (60) during the welding process.

## Revendications

1. Procédé de fabrication de jonctions par soudure (78) sur des conducteurs d'une machine électrique (10) comportant un stator (16) avec un enroulement enfichable (18) dont les segments de conducteurs (36) sont interconnectés à un enroulement ondulé ou à un enroulement à boucles au moins dans une tête de bobine (45, 46) sur une face frontale d'un empilage de tôles (17), en assemblant par soudage, par paire, des extrémités (42) des segments de conducteurs (36) agencées en séries concentriques et faisant saillie à partir des rainures (34) du stator (16), **caractérisé en ce que** les extrémités (42) des segments de conducteurs (36) sont assemblées par paire par un soudage par résistance, dans lequel les extrémités (42) des segments de conducteurs (36) à assembler sont soudées d'une part par plusieurs électrodes (62, 64) discrètes, alignées radialement et agencées sur la périphérie du stator, et d'autre part par une électrode commune (60) annulaire, coaxiale à l'axe de la machine, ou par une électrode commune constituée de plusieurs segments annulaires disposés en série les uns derrière les autres, qui forment un anneau fermé.

2. Procédé selon la revendication 1, **caractérisé en ce que** les extrémités (42) de quatre segments de conducteurs (36) à assembler respectivement par paire peuvent être mis en contact d'une part par au moins deux électrodes (62, 64) discrètes, appliquées sur les extrémités de conducteurs de manière radialement alignée à l'intérieur et à l'extérieur, et d'autre part par au moins une électrode commune (60) de forme circulaire ou en forme de segment circulaire, s'étendant au centre entre les extrémités de conducteurs (42) les électrodes (62, 64) discrètes.

3. Procédé selon la revendication 1 ou 2, **caractérisé en ce qu'**une force de pression (P) dirigée radialement est exercée sur les extrémités de conducteurs (42) du stator (16) à assembler et sur l'électrode commune (60), à partir de la ou des électrodes discrètes (62, 64) lors d'une opération de soudage.

4. Procédé selon l'une des revendications précédentes, **caractérisé en ce que** les jonctions par soudure (78) sont fabriquées d'un côté dans la tête de bobine (45) du côté de l'entraînement de la machine (10).

5. Procédé selon l'une des revendications précédentes, **caractérisé en ce que** l'intensité du courant de soudage (I) et/ou de la force de pression (P) lors du soudage pour chaque jonction par soudure individuelle (78) est surveillée par un dispositif de contrôle (70, 72, 74, 76).

6. Procédé selon l'une des revendications précédentes, **caractérisé en ce que** les jonctions par soudure (78) d'un enroulement enfichable (18) avec quatre segments de conducteurs (36) situés les uns au-dessus des autres dans chaque rainure (34) sont fabriquées en deux séries concentriques dans la tête de bobine (45) du stator.

7. Dispositif de fabrication de jonctions par soudure (78) sur des conducteurs d'une machine électrique (10), ayant une machine électrique (10) comportant un stator (16) muni d'un enroulement enfichable (18) dont les segments de conducteurs (36) sont interconnectés à un enroulement ondulé ou à un enroulement à boucles au moins dans une tête de bobine (45, 46) sur une face frontale d'un empilage de tôles (17), en assemblant ainsi par soudage, par paire, des extrémités (42) des segments de conducteurs (36) agencées en séries concentriques et faisant saillie à partir des rainures (34) du stator (16), **caractérisé en ce que** les extrémités (42) des segments de conducteurs sont assemblées par paire par un soudage par résistance, dans lequel le dispositif de soudage comporte plusieurs électrodes (62, 64) discrètes, alignées radialement et agencées sur la périphérie du stator pour venir en contact avec les extrémités (42) de plusieurs paires des segments de conducteurs (36) à assembler, ainsi qu'une électrode commune (60) annulaire, ou une électrode commune constituée de plusieurs segments annulaires disposés en série les uns derrière les autres, qui forment un anneau fermé, pour venir en contact avec une pluralité d'extrémités de conducteurs (42).

8. Dispositif ayant une machine électrique (10) selon la revendication 7, **caractérisé en ce que** deux électrodes discrètes (62, 64) radialement opposées des deux côtés de l'électrode commune (60) et de la paire de conducteurs à assembler sont agencées de manière à assembler respectivement par paire quatre segments de conducteurs (36) situés les uns au-dessus des autres.

9. Dispositif ayant une machine électrique (10) selon la revendication 7 ou 8, **caractérisé en ce que** les extrémités (42) à assembler des segments de conducteurs (36) sont maintenues radialement les unes au-dessus des autres par les électrodes (60, 62, 64) du dispositif de soudage.

10. Dispositif ayant une machine électrique (10) selon l'une des revendications 7 à 9, **caractérisé en ce que** les extrémités (42) à assembler des segments de conducteurs (36) peuvent être positionnées par des faces frontales profilées (63, 65) des électrodes discrètes (62, 64) et/ou de l'électrode commune (60) lors de l'opération de soudage.
